# EUROPÄISCHE PATENTSCHRIFT

(11) **EP 1 444 269 B1**
(45) Veröffentlichungstag und Bekanntmachung des Hinweises auf die Patenterteilung: **16.08.2006**
(21) Anmeldenummer: 02772304.8
(22) Anmeldetag: 16.09.2002
(51) Int. Cl.: C08F 2/32

(54) **INVERTORMISCHUNGEN FÜR POLYMERDISPERSIONEN MIT VERBESSERTER UMWELTVERTRÄGLICHKEIT**
INVERTER MIXTURES FOR POLYMER DISPERSIONS WITH IMPROVED ENVIRONMENTAL IMPACT
MELANGES INVERSEURS POUR DISPERSIONS POLYMERES, PRESENTANT UN MEILLEUR IMPACT SUR L'ENVIRONNEMENT

(30) Priorität: 19.10.2001 DE 10151187
(43) Veröffentlichungstag der Anmeldung: 11.08.2004
(73) Patentinhaber: Stockhausen GmbH, 47805 Krefeld (DE)
(72) Erfinder: MERTENS, Richard, 47803 Krefeld (DE); ZIMMERMANN, Klaus, 63517 Rodenbach (DE)
(74) Vertreter: Wolff, Felix
(86) Internationale Anmeldenummer: PCT/EP2002/010348
(87) Internationale Veröffentlichungsnummer: WO 2003/035702

(56) Entgegenhaltungen:
- EP-A- 0 161 773
- EP-A- 0 182 282
- EP-A- 0 325 065
- EP-A- 0 594 009
- DE-A- 2 926 103
- DE-A- 4 225 909
- US-A- 4 024 097
- US-A- 4 764 574
- US-A- 5 334 621
- US-A- 5 684 058

## Beschreibung

Die vorliegende Erfindung betrifft eine Invertormischung, die mindestens einen oxethylierten Fettalkohol und mindestens ein oxethyliertes Fettsäuremono- und/oder dialkanolamid oder mindestens einen oxethylierten Fettalkohol und mindestens ein Alkylpolyglykosid enthält.
Ferner betrifft die vorliegende Erfindung die Verwendung der erfindungsgemäßen Invertormischungen als Zusatz zu Wasser-in-Öl-Polymerdispersionen sowie Wasser-in-Öl-Polymerdispersionen selbst, die solche Invertormischungen enthalten und die Verwendung der Wasser-in-Öl-Polymerdispersionen als Flockungsmittel, Verdickungsmittel, Träger für Agrarchemikalien oder als Erosionsschutzmittel.

Wasser-in-Öl-Polymerdispersionen finden eine breite Verwendung, beispielsweise als Flockungsmittel bei der Sedimentation von Feststoffen, insbesondere bei der Wasser- und Prozeßwasseraufbereitung bzw. Abwasserreinigung, bei der Rohstoffgewinnung, beispielsweise von Kohle, Aluminium und Erdöl oder als Hilfsmittel bei der Papierherstellung und in der Zuckerindustrie. Da diese Polymerdispersionen in bestimmten Anwendungsbereichen, beispielsweise bei der Verwendung als Zusatz in Feuerlösch-, Pflanzenschutz- oder in Erosionsschutzmitteln, häufig in der freien Natur verwendet werden, kommt den ökotoxikologischen Eigenschaften solcher Dispersionen eine immer größere Bedeutung zu, denen die derzeitig verfügbaren Produkte oftmals nur unzureichend gerecht werden.

In der Regel muß die Wasser-in-Öl-Dispersion vor oder bei deren Anwendung in eine Öl-in-Wasser-Dispersion invertiert werden. Dies geschieht durch die Zugabe von Umkehremulgatoren, sogenannten Invertoren, die die Benetzbarkeit der polymerhaltigen Micellen durch eine kontinuierliche Wasserphase herstellen. Üblicherweise werden hierzu oxethylierte Fettalkohole eingesetzt, wie beispielsweise Marlipal® O 13/50, ein fünffach oxethyliertes Isodecanol, das von der Firma Condea vertrieben wird.

Nachteilig an den oxethylierten Fettalkoholen ist, daß sie vergleichsweise daphnientoxisch sind und dadurch die ökotoxologischen Eigenschaften des fertigen Produkts deutlich verschlechtern. Andere, ökotoxologisch unbedenkliche Tenside wie beispielsweise oxethylierte Fettsäureethanolamide oder Alkylpolyglykoside sind als Umkehremulgatoren meist ungeeignet, da ihre Lösungseigenschaften in der Wasser-in-Öl-Polymerdispersion unzureichend sind und/oder daß sie die Dispersion zu sehr verdicken.

Es bestand daher die Aufgabe, eine Invertormischung zur Verfügung zu stellen, die
- eine vergleichsweise geringe Ökotoxizität aufweist,
- ausreichend dispergierbar bzw. löslich in Wasser-in-Öl-Polymerdispersionen ist und
deren Zusatz zu Polymerdispersionen Produktviskositäten zur Folge hat, die eine Anwendung dieser Polymerdispersionen als Zusatz in Feuerlösch-, Pflanzenschutz- oder in Erosionsschutzmitteln oder als Flockungshilfsmittel, Retentionsmittel oder Entwässerungsmittel erlaubt.

Diese Aufgabe wurde durch die Bereitstellung einer Invertormischung gelöst, die mindestens einen oxethylierten Fettalkohol und mindestens ein oxethyliertes Fettsäuremono- und/oder dialkanolamid oder mindestens einen oxethylierten Fettalkohol und mindestens ein Alkylpolyglykosid enthält.

Die Invertormischung weist mindestens einen oxethylierten Fettalkohol und mindestens ein oxethyliertes Fettsäuremono- und/oder dialkanolamid oder mindestens ein Alkylpolyglykosid auf.

Der Fachmann versteht, daß Fettalkohol, Fettsäuremono- und/oder dialkanolamid und Alkylpolyglykosid im Sinne der Erfindung auch die Mischung mehrerer Substanzen derselben Stoffklasse sein kann.

Vorzugsweise beträgt das Verhältnis von oxethyliertem Fettalkohol zu oxethyliertem Fettsäuremono- und/oder dialkanolamid oder zu Alkylpolyglykosid von 1:10 bis 10:1, vorzugsweise 1:3 bis 3:1. Der Anteil an oxethyliertem Fettsäuremono- und/oder dialkanolamid in der Mischung sinkt in der Regel mit steigendem Oxethylierungsgrad.

Vorzugsweise enthält die Invertormischung mindestens einen oxethylierten Fettalkohol, der linear oder verzweigt ist und dessen Alkylkette 8 bis 30, vorzugsweise 8 bis 22, besonders bevorzugt 12 bis 18 und ganz besonders bevorzugt 10 bis 15 Kohlenstoffatome aufweist.

Ebenfalls bevorzugt wird ein Ethoxylierungsprodukt von mindestens einem hochverzweigten Fettalkohol in den erfindungsgemäßen Mischungen eingesetzt, die durch Oxosynthese zugänglich sind, wie beispielsweise Isotridecylalkohol. Besonders bevorzugt werden Ethoxylierungsprodukte von höheren, einmal verzweigten Fettalkoholen verwendet, die durch Guerbetsynthese erhältlich sind.

In einer bevorzugten Ausführungsform enthält die Invertormischung mindestens einen oxethylierten Fettalkohol, der 1 bis 20 fach, vorzugsweise 2 bis 12 fach , besonders bevorzugt 3 bis 8 fach oxethyliert sind.

Ganz besonders bevorzugt sind Invertormischungen, die mindestens einen oxethylierten Fettalkohol enthalten, der 10 bis 15, vorzugsweise 12 bis 14, besonders bevorzugt 13 Kohlenstoffatome aufweist und 3 bis 8 fach ethoxyliert ist.

Ebenfalls bevorzugt ist eine Invertormischung , die mindestens ein oxethyliertes Fettsäuremono- und/oder dialkanolamid enthält, dessen Fettsäureanteil 6 bis 22, vorzugsweise 10 bis 18, besonders bevorzugt 12 bis 14 Kohlenstoffatome aufweist.

Bevorzugt sind auch Invertormischungen, die mindestens ein oxethyliertes Fettsäuremono-ethanolamid enthalten, das bis zu 22 fach, vorzugsweise 4 bis 13 fach oxethyliert ist.

Weiterhin ist eine Invertormischung bevorzugt, die mindestens ein Alkylpolyglykosid enthält, dessen Alkylanteil 6 bis 22, vorzugsweise 6 bis 16, besonders bevorzugt 8 bis 12 Kohlenstoffatome aufweist.

Die erfindungsgemäßen Invertormischungen weisen eine geringe Ökotoxizität auf. Die erfindungsgemäßen Invertormischungen sind in Wasser-in-Öl-Polymerdispersionen ausreichend dispergierbar bzw. löslich und erhöhen deren Viskosität nur unwesentlich. Dieser Erhöhung der Produktviskosität kann durch die Veränderung des Verhältnisses von Öl zu Wasser in der Dispersion entgegengewirkt werden.
Mit den erfindungsgemäßen Invertormischungen lassen sich Polymerdispersionen herstellen, deren Produktviskosität nach der Aktivierung im Bereich von 100-1000 mPa*s gemessen mit einem Brookfield Viskosimeter liegt und die innerhalb einer kurzen Zeit, beispielsweise innerhalb von 8-15 Sekunden durch Wasser vollständig benetzbar bzw. löslich bzw. in Wasser gequollen sind. Solche Polymerdispersionen sind beispielsweise als Verdickungsmittel für Feuerlöschwasser einsetzbar.

Ein weiterer Aspekt der vorliegenden Erfindung betrifft die Verwendung der erfindungsgemäßen Invertormischung als Zusatz zu Wasser-in-Öl-Polymerdispersionen.

Vorzugsweise wird die Invertormischung in einer Menge von 0,5 bis 10 Gew.-%, besonders bevorzugt 2 bis 8 Gew.-%, ganz besonders bevorzugt 3 bis 6 Gew.-%, bezogen auf die Gesamtmenge der Wasser-in-Öl-Polymerdispersion, zugesetzt.

Die Invertormischung wird vorzugsweise dazu verwendet, eine Wasser-in-Öl-Polymerdispersion durch den Zusatz großer Mengen Wasser in eine Öl-in-Wasser-Polymerdispersion zu überführen.
Die Invertormischung ist gut mit den Wasser-in-Öl-Polymerdispersionen mischbar und erhöht die Viskosität des resultierenden Produktes nur in einem geringen Umfang. Die Polymerdispersionen weisen eine geringe Ökotoxizität auf.

Ein weiterer Gegenstand der Erfindung betrifft Wasser-in-Öl-Polymerdispersionen bestehend aus einer kontinuierlichen, mit Wasser praktisch nicht mischbaren organischen Phase und darin fein verteilten, wasserlöslichen und/oder wasserquellbaren Polymerisaten und gegebenenfalls Hilfsstoffen, die eine erfindungsgemäße Invertormischung enthalten.

Eine Wasser-in-Öl-Polymerdispersion im Sinne der Erfindung umfaßt sowohl eine Polymeremulsion als auch eine Polymersuspension, wie sie z.B. in Ullmann's Encyclopedia of Industrial Chemistry, 1988, Vol. A11, Seite 254 beschrieben sind.

Vorzugsweise bestehen die Wasser-in-Öl-Polymerdispersionen aus:
A) 10 bis 70 Gew.%, bevorzugt 20 bis 50 Gew.%, besonders bevorzugt 25 bis 35 Gew.%, eines wasserlöslichen und/oder wasserquellbaren Polymerisates,
B) 20 bis 80 Gew.% einer organischer Phase,
C) 0,5 bis 10 Gew.% eines Wasser-in-Öl-Emulgators,
D) gegebenenfalls 0,01-2 Gew.% eines Restmonomerenvernichters,
E) 0,5 bis 10 Gew.% der Invertormischung, und einem
F) Rest auf 100 Gew.% Wasser.

Bei den in den erfindungsgemäßen Wasser-in-Öl-Polymerdispersionen enthaltenen Polymerisaten handelt es sich um eine Klasse von Produkten, die durch Umkehrphasen-Emulsionspolymerisation hergestellt werden. Dabei erzeugt man in einer kontinuierlichen, mit Wasser praktisch nicht mischbaren organischen Phase unter Zusatz von Wasser-in-Öl-Emulgatoren fein verteilte wasserlösliche und/oder wasserquellbare Polymerisate.

Zur Herstellung der Polymerisate werden die Monomere der organischen Phase als Monomerenlösung, bestehend aus Wasser und geeigneten Monomeren, zugesetzt. Die wäßrige Monomerenlösung enthält wenigstens ein polymerisierbares, hydrophiles Monomer. Diese kann aber auch aus einer Mischung von zwei oder mehreren Monomeren aus der Gruppe der hydrophilen Monomere bestehen.

Hydrophile, vorzugsweise wasserlösliche Monomere sind beispielsweise
- olefinisch ungesättigte Carbonsäuren und Carbonsäureanhydride, insbesondere Acrylsäure, Methacrylsäure, Itaconsäure, Crotonsäure, Glutaconsäure, Maleinsäure und Maleinsäureanhydrid und die wasserlöslichen Salze derselben,
- olefinisch ungesättigte Sulfonsäuren, insbesondere aliphatische oder aromatische Vinylsulfonsäuren, wie etwa Vinylsulfonsäure, Allylsulfonsäure, Styrolsulfonsäure, insbesondere Acryl- und Methacrylsulfonsäuren, wie etwa Sulfoethylacrylat, Sulfoethylmethacrylat, Sulfopropylacrylat, Sulfopropylmethacrylat, 2-Hydroxy-3-methacryloxypropylsulfonsäure und 2-Acrylamido-2-methylpropansulfonsäure(AMPS) und die vorzugsweise wasserlöslichen Salze derselben, und
- wasserlösliche beziehungsweise wasserdispergierbare Derivate der Acryl- und Methacrylsäuren, insbesondere Acrylamid, Methacrylamid, n-alkylsubstituierte Acrylamide, 2-Hydroxyethylacrylat, 2-Hydroxyethylmethacrylat, Hydroxypropylacrylat, Hydroxypropylmethacrylat, einem C₁-C₄₋Alkyl(meth)acrylat und Vinylacetat.

Bevorzugt enthält die Monomerenlösung als Monomere Acrylsäure und/oder ein Acrylsäurederivat, besonders bevorzugt mindestens ein Salz der Acrylsäure und/oder Acrylamid und ganz besonders bevorzugt eine Mischung aus Acrylsäure, mindestens einem Salz der Acrylsäure, Acrylamid und einem Salz der 2-Acrylamido-2-methylpropansulfonsäure.

Weitere bevorzugte Monomere sind Dialkyldiallylammoniümchlorid, Dialkylaminoalkyl-(meth)acrylsäureester sowie Dialkylaminoalkyl-(meth)acrylsäureamide, insbesondere jeweils in Form der Salze oder in quaternierter Form. Hierzu zählen vorzugsweise (Meth)Acrylsäure-2-(trimethylammonio)ethylester-chlorid sowie (Meth)Acrylsäure-3-(trimethylammonio)propyl-amidchlorid.

Zur Herstellung der monomerenhaltigen Wasser-in-ÖI-Dispersion wird die Monomerenlösung einer organischen Phase zugesetzt, die einen Wasser-in-Öl-Emulgator enthält. Als organische Phase können prinzipiell alle dem Fachmann für eine Umkehr-Emulsionspolymerisation bekannten Substanzen, vorzugsweise aliphatische Kohlenwasserstoffe, verwendet werden.

In einer bevorzugten Ausführungsform dieser Erfindung werden als organische Phase Fettsäureester verwendet. Besonders bevorzugt werden Ester von linearen gesättigten bzw. ungesättigten Fettsäuren, insbesondere Fettsäuren mit einer Alkylkettenlänge von mehr als 11 Kohlenstoffatomen, vorzugsweise Laurin-, Myristin-, Palmitin-, Stearin- oder Ölsäure, verwendet. Als Alkoholkomponente werden vorzugsweise kurzkettige Alkohole, bevorzugt C₁-C₄-Alkohole, verwendet. Ebenfalls bevorzugt werden höhere, einmal verzweigte Alkohole eingesetzt, die vorzugsweise durch eine Guerbetsynthese hergestellt werden können. Durch Verwendung dieser Substanzen werden Wasser-in-Öl-Polymerdispersionen erhalten, die eine sehr geringe Daphnientoxizität, gemessen nach der OECD Richtlinie 202, aufweisen.

Die Fettsäureester werden allein oder bevorzugt in Mischung mit einem Kohlenwasserstoff oder einem Gemisch aus Kohlenwasserstoffen eingesetzt, wobei der Kohlenwasserstoff oder das Gemisch aus Kohlenwasserstoffen vorzugsweise einen Siedepunkt von weniger als 200°C aufweisen. Ganz besonders bevorzugt werden zu diesem Zweck sogenannte Weißöle aus der Erdöldestillation oder Ligroin mit einem Siedebereich von 150-200°C verwendet.

Vorzugsweise wird die organische Phase in einer Menge von 20 bis 80 Gew.%, bezogen auf die Menge der Dispersion, eingesetzt.

Als Emulgator werden der organischen Phase 0,5 bis 10 Gew.%, bezogen auf die Menge der Dispersion, mindestens eines öllöslichen Emulgators zugegeben. Vorzugsweise werden Wasser- in-Öl (W/O)-Emulgatoren verwendet. Besonders bevorzugt werden Sorbitanester, Phthalsäureester, Fettsäureglyceride und ethoxylierte Derivate derselben in Kombination mit W/O-Emulgatoren eingesetzt. Ganz besonders bevorzugt werden polymere Emulgatoren mit dem Handelsnamen Hypermer® (ICI, London, England) verwendet.

Nach Abschluß der Polymerisation wird der Polymerdispersion vorzugsweise ein Restmonomerenvernichter zugesetzt. Der Zusatz wird so bemessen, daß der Gehalt an Restmonomeren in der resultierenden Wasser-in-Öl-Polymerdispersion kleiner als 1.000 ppm, vorzugsweise kleiner als 500 ppm und besonders bevorzugt kleiner als 300 ppm ist.

Restmonomerenvernichter im Sinne der vorliegenden Erfindung sind Substanzen, die polymerisierbare Monomere durch eine chemische Reaktion derart modifizieren, daß sie nicht mehr polymerisierbar sind, so daß sie im Sinne der vorliegenden Erfindung keine Monomere mehr sind. Zu diesem Zweck können Substanzen verwendet werden, die mit der in den Monomeren vorhandenen Doppelbindung reagieren und/oder Substanzen, die eine weitergehende Polymerisation einleiten können.

Als Restmonomerenvernichter, die mit der Doppelbindung reagieren, können z.B. Reduktionsmittel verwendet werden, vorzugsweise
- Substanzen aus der Gruppe der sauren und neutralen Salze der vom Schwefel abgeleiteten Säuren mit einer Oxidationszahl kleiner als VI, bevorzugt Natriumdithionit, Natriumthiosulfat, Natriumsulfit oder Natriumpyrosulfit, und/oder
- Substanzen mit einer Schwefelwasserstoffgruppe, vorzugsweise Natriumhydrogensulfid oder Verbindungen aus der Gruppe der Thiole, bevorzugt Merkaptoethanol, Dodecylmerkaptan, Thiopropionsäure oder Salze der Thiopropionsäure oder Thiopropansulfonsäure oder Salze der Thiopropansulfonsäure, und/oder
- Substanzen aus der Gruppe der Amine, bevorzugt aus der Gruppe der Amine mit niederer Flüchtigkeit, vorzugsweise Diisopropanolamin oder Aminoethylethanolamin, und/oder
- Substanzen aus der Gruppe, die aus Buntesalzen, Formamidinsulfinsäure, Schwefeldioxid, wäßrigen und organischen Lösungen von Schwefeldioxid oder Thioharnstofrbestehen.

Der Fachmann erkennt, daß auch eine Mischung von mindestens zwei Restmonomerenvernichtern aus einer oder mehreren Gruppen eingesetzt werden kann.

Zur Reduzierung des Restmonomerengehaltes durch eine erneut eingeleitete Polymerisation können die oben genannten Reduktionsmittel allein oder in Kombination mit Oxidationsmitteln, vorzugsweise Substanzen aus der Gruppe der Peroxodisulfate oder Hydroperoxide, bevorzugt Wasserstoffperoxid, verwendet werden. Desweiteren eignen sich Verbindungen, die bei erhöhter Temperatur in Radikale zerfallen, wie vorzugsweise Substanzen aus der Gruppe der Azoverbindungen, Peroxide oder Peroxodisulfate.

Vorzugsweise werden der Polymerdispersion 0,01 bis 2 Gew.% an Restmonomerenvernichtern zugesetzt.

Abschließend wird der Wasser-in-Öl-Polymerdispersion die erfindungsgemäße Invertormischung in einer Menge von vorzugsweise 0,5 bis 10 Gew.%, bezogen auf die Menge der Dispersion, zugegeben.

Die erfindungsgemäße Wasser-in-Öl-Polymerdispersion enthält vorzugsweise 10 bis 70 Gew.%, besonders bevorzugt 20 bis 50 Gew.% und ganz besonders bevorzugt 25 bis 40 Gew.%, an wasserlöslichen und/oder wasserquellbaren Polymerteilchen.

Die Polymerteilchen weisen vorzugsweise eine Partikelgröße von weniger als 2 µm, und besonders bevorzugt eine Partikelgröße von weniger als 1 µm auf.

Die erfindungsgemäßen, wasserlöslichen und/oder wasserquellbaren Polymere enthaltenden, Wasser-in-Öl-Polymerdispersionen zeichnen sich gegenüber solchen nach dem Stand der Technik durch eine verbesserte Umweltverträglichkeit aus.

Durch diese verbesserte Umweltverträglichkeit sind die erfindungsgemäßen Polymerdispersionen aus ökologischen Gesichtspunkten besonders für einen Einsatz in der freien Natur geeignet. Zusätzlich weisen die resultierenden Produkte eine vergleichsweise geringe Viskosität und verhältnismäßig kurze Aktivierungszeiten auf.

Ein weiterer Gegenstand der vorliegenden Erfindung ist ein Verfahren zur Herstellung der erfindungsgemäßen Wasser-in-Öl-Polymerdispersionen, vorzugsweise durch Phasenumkehr-Emulsionspolymerisation, vorzugsweise unter Verwendung eines oder mehrerer Fettsäureester als organische Phase, wobei dem Polymerisat nach der Polymerisation eine erfindungsgemäße Invertormischung zugesetzt wird.

Bevorzugt werden in dem erfindungsgemäßen Verfahren Restmonomerenvernichter aus der Gruppe der sauren und neutralen Salze der vom Schwefel abgeleiteten Säuren mit einer Oxidationszahl kleiner als VI, bevorzugt Natriumdithionit, Natriumthiosulfat, Natriumsulfit oder Natriumdisulfit, und/oder Substanzen mit einer Schwefelwasserstoffgruppe, vorzugsweise Natriumhydrogensulfid oder Verbindungen aus der Gruppe der Thiole, bevorzugt Merkaptoethanol, Dodecylmerkaptan, Thiopropionsäure oder Salze der Thiopropionsäure oder Thiopropansulfonsäure oder Salze der Thiopropansulfonsäure, und/oder Substanzen aus der Gruppe der Amine, bevorzugt aus der Gruppe der Amine mit niederer Flüchtigkeit, und/oder Substanzen aus der Gruppe, die aus Buntesalzen, Formamidinsulfinsäure, Schwefeldioxid, wäßrigen und organischen Lösungen von Schwefeldioxid oder Thioharnstoff bestehen, verwendet.

Ferner werden die Restmonomerenvernichter vorzugsweise in einer Menge von 100 bis 20.000 ppm, besonders bevorzugt 200 bis 5.000 ppm, ganz besonders bevorzugt 500 bis 3.000 ppm, bezogen auf die Dispersion, verwendet.

Die Polymerisation wird durch Zugabe von dem Fachmann bekannten Polymerisationsinitiatoren gestartet. Vorzugsweise werden hierzu Azoverbindungen, Peroxidverbindungen oder Redoxkatalysatoren, jeweils alleine oder in Mischung bzw. in Kombination miteinander, in einer Menge von 0,001 bis 5 Gew.%, bezogen auf die Menge an Monomerenlösung, verwendet.

Die Polymerisation wird adiabatisch, isotherm oder als Kombination eines adiabatischen und isothermen Verfahrens durchgeführt.

Bei der isothermen Prozeßführung wird die Polymerisation bei einer bestimmten Temperatur unter vermindertem Druck gestartet, wie beispielsweise in der EP 228 397 B1 beschrieben. Diese Schrift wird hiermit als Referenz eingeführt und gilt als Teil der Offenbarung. Der verminderte Druck wird dabei so eingestellt, daß durch die entstehende Polymerisationswärme flüchtige Stoffe, wie Wasser und Bestandteile der organischen Phase, abdestillieren und die Temperatur nahezu konstant gehalten werden kann. Das Ende der Polymerisation ist dadurch charakterisiert, daß kein Destillat mehr übergeht. Nach der Polymerisation werden erfindungsgemäß der Polymerdispersion gegenbenenfalls die o.g. Restmonomerenvernichter zugesetzt.

Analog zu dem isothermen Verfahren wird der adiabatische Prozeß bei einer bestimmten Temperatur im Bereich von 0 bis 100°C, vorzugsweise von 50 bis 75°C, gestartet. Die Polymerisation wird jedoch bei Atmosphärendruck ohne äußere Wärmezufuhr durchgeführt, bis durch die Polymerisationswärme eine vom Gehalt der Dispersion an polymerisierbarer Substanz abhängige, maximale Endtemperatur der Dispersion erreicht wird. Nach dem Ende der Polymerisation erfolgt eine Abkühlung der Reaktionsmischung, in deren Verlauf der Restmonomerenvernichter zugesetzt wird.

Die Polymerisation kann desweiteren als Kombination eines isothermen und adiabatischen Prozeßteils durchgeführt werden. Ein solcher Prozeß wird vorzugsweise zunächst isotherm geführt. Zu einem vorher bestimmten Zeitpunkt wird die Apparatur mit Inertgas belüftet und die Polymerisation bis zu einer bestimmten Endtemperatur adiabatisch weiter geführt. Daran anschließend wird der Ansatz bei vermindertem Druck unter Destillation bis auf eine vorgewählte Temperatur abgekühlt.

Abschließend wird die Polmerdispersion mit der erfindungsgemäßen Invertormischung in einer Menge von vorzugsweise 0,5 bis 10 Gew.%, bezogen auf die gesamte Polymerdispersion versetzt, wobei die Invertormischung vorzugsweise in die Polymerdispersion unter Rühren eingebracht.

Das erfindungsgemäße Verfahren ist einfach durchzuführen.

Ein weiterer Gegenstand der vorliegenden Erfindung betrifft die Verwendung der erfindungsgemäßen Wasser-in-Öl-Polymerdispersionen als Flockungsmittel bei
- der Sedimentation von Feststoffen, insbesondere bei der Wasser- und Prozeßwasseraufbereitung bzw. Abwasserreinigung und
- bei der Rohstoffgewinnung, vorzugsweise von Kohle, Aluminium und Erdöl oder als Hilfsmittel bei der Papierherstellung und in der Zuckerindustrie.

Ferner finden die erfindungsgemäßen Wasser-in-Öl-Polymerdispersionen Verwendung als Verdickungsmittel, vorzugsweise als Verdickungsmittel für Feuedöschwasser.

Die erfindungsgemäßen Wasser-in-Öl-Polymerdispersionen können auch als Träger für Agrarchemikalien, vorzugsweise als Träger von Pflanzenschutzmitteln oder anderen biologisch wirksamen Stoffen verwendet werden oder sind als Erosionsschutzmitteln einsetzbar.

### Beispiele

Im folgenden wird die Erfindung anhand von Beispielen erläutert.

### Bestimmung der Viskositäten:

Die Viskosität wurde als Scherviskosität mit einem Viskosimeter RVT-DVII der Firma Brookfield gemessen. Die Messung erfolgte mit Spindel 5 bei drei verschiedenen Schergefällen (1,0, 2,5 und 5,0 UpM). Die abgelesenen Werte werden bei den verschiedenen Schergefällen als Viskosität in mPa*s angegeben.

### Bestimmung der Anspringzeit

Die Anspringzeit wurde durch Einbringen der mit dem erfindungsgemäßen Invertor versetzten Polymerdispersion in Wasser bestimmt. Dazu wurden 27,5 g des aktivierten Dispersionspolymerisates mit 972,5 g Wasser verrührt, indem ein Gefäß, das die Flüssigkeiten enthielt, unter einen Propellerrührer Record der Firma Multifix gestellt und der Rührmotor gestartet wurde. Beginnend mit 3000 min⁻¹ wurde die Drehzahl auf 3300 min⁻¹ gesteigert und die Zeit gemessen, bis der Rührkegel nicht mehr sichtbar war. Diese Zeitspanne wird als Anspringzeit in Sekunden angegeben.

### Chemikalien

Acrylamid und Natrium-2-acrylamido-2-methylpropansulfonat wurden als 50-Gew.-% wäßrige Lösung und Acrylsäure-2-(trimethylammonio)ethylester-chlorid als 80-Gew.-% wäßrige Lösung eingesetzt. Der Wasseranteil wurde rechnerisch der Gesamtwassermenge zugeschlagen.

### Chemische Charakterisierung der eingesetzten Rohstoffe:

| | |
|---|---|
| Hypermer® 1083: | Sorbitanmonooleat mit Schutzkolloid der Firma ICl |
| Edenor® MESU: | Rübölfettsäuremethylester der Firma Henkel |
| Shellsol® D40: | Gemisch von n-, i- und cyclo-Aliphaten der Firma Shell |
| Marlipal® O13: | oxethyliertes Isotridecanol der Firma Condea |
| Glucopon® 225 DK: | C₈-C₁₀-Feftalkoholpolyglykosid, 68-72 Gew% in wäßriger Lösung (Firma Henkel) |
| Imbentin® CMEA: | oxethyliertes Kokosfettsäuremonoethanolamid der Firma Kolb, Hedingen, Schweiz |
| Intrasol® FA: | Fettalkoholpolyglykolether der Firma Servo |

### Vergleichsbeispiel 1:

Zu einer Lösung aus 288 g Acrylsäure, 99 g Acrylamid, 37,8 g Natrium-2-acrylamido-2 methylpropansulfonat und 223,20 g Natriumhydroxid in 516,95 g Wasser wurden 1,00 ml Pentanatriumdiethylentriaminpentaacetat (58-Gew.% in H₂O), 2,40 ml Ameisensäure und 2,63 g Triallylmethylammoniumchlorid gegeben. Dazu wurde eine Lösung von 45 g Hypermer®1083 in 342 g Edenor® MESU und 136,8 g Shellsol® D40 gemischt. Die Mischung wurde mit einem Krupp 3Mix-Mixer zu einer feinverteilten Emulsion homogenisiert und in einen 2Liter-Sulfierkolben mit KPG-Rührer gegeben. Nach dem Entgasen durch Durchblasen von Stickstoff wurden 0,50 g Diethyl-2,2'-azobisisobutyrat zugegeben und die Mischung auf 60 °C erwärmt. Die Polymerisation startete und wurde durch Siedekühlung zwischen 60 °C und 100 °C gehalten. Anschließend wurde auf 40 °C gekühlt. Dann wurde unter Rühren eine Lösung von 1,80 g Na₂SO₃ und 20,70 g Wasser zugegeben und 60 min bei 40 °C gerührt. 286,8 g der Wasser-in-Öl-Polymerdispersion wurden entnommen und mit 13,2 g (4,4 Gew.%) Marlipal® O 13/50 versetzt. Die Anspringzeit und die unterschiedlichen Viskositäten des Produktes wurden bestimmt und sind in Tabelle 1 aufgeführt.

**Tabelle 1, Aktivierung mit 4,4 Gew.-% Marlipal® O 13/50**

| Produktviskosität, | Anspringzeit | Lösungsviskosität 1,0 UpM | Lösungsviskosität 2,5 UpM | Lösungsviskosität 5,0 UpM |
|---|---|---|---|---|
| mPa*s | Sec. | mPa*s | mPa*s | mPa*s |
| 220 | 7 | 53000 | 28300 | 18000 |

### Vergleichsbeispiel 2:

Die Herstellung der Wasser-in-Öl-Polymerdispersion erfolgte wie im Vergleichsbeispiel 1.
286,8 g der Dispersion wurden entnommen und mit 13,2 g (4,4 Gew.%) Glucopon® 225 DK versehen. Dabei fiel das Alkylpolyglykosid flockig aus.

### Beispiel 1:

Die Herstellung der Wasser-in-Öl-Polymerdispersion erfolgte wie im Vergleichsbeispiel 1. 286,8 g der Dispersion wurden entnommen und mit 13,2 g (4,4 Gew.-%) eines Gemisches aus Glucopon® 225 DK und Marlipal® 013/30 im Mischungsverhältnis 1:1 versehen. Die Kenndaten des Produktes wurden bestimmt und sind in Tabelle 2 aufgeführt.

**Tabelle 2, Aktivierung mit 4,4 Gew.% eines Gemisches aus Glucopon® 225 DK/ Marlipal® 013/30 (1:1)**

| Produktviskosität, | Anspringzeit | Lösungsviskosität 1,0 UpM | Lösungsviskosität 2,5 UpM | Lösungsviskosität 5,0 UpM |
|---|---|---|---|---|
| mPa*s | Sec. | mPa*s | mPa*s | mPa*s |
| 300 | 30 | 80400 | 40000 | 23600 |

### Beispiel 2:

Die Herstellung der Wasser-in-Öl-Polymerdispersion erfolgte wie im Beispiel 1. 282 g der Dispersion wurden entnommen und mit 18 g (6 Gew.%) eines Gemisches aus Glucopon® 225 DK und Marlipal® 013/30 im Mischungsverhältnis 1:1 versehen. Die Kenndaten des Produktes wurden bestimmt und sind in Tabelle 3 angegeben.

**Tabelle 3, Aktivierung mit 6 Gew.% eines Gemisches aus Glucopon® 225 DK/ Marlipal® 013/30 (1:1)**

| Produktviskosität, | Anspringzeit | Lösungsviskosität 1,0 UpM | Lösungsviskosität 2,5 UpM | Lösungsviskosität 5,0 UpM |
|---|---|---|---|---|
| mPa*s | Sec. | mPa*s | mPa*s | mPa*s |
| 740 | 20 | 66000 | 35200 | 21800 |

### Beispiel 3:

Zu einer Lösung aus 288 g Acrylsäure, 99 g Acrylamid, 37,8 g Natrium-2-acrylamido-2-methylpropansulfonat und 223,2 g Natriumhydroxid in 452,15 g Wasser wurden 1,00 ml Pentanatriumdiethylentriamminpentaacetat (58 Gew% in H₂O) 2,40 ml Ameisensäure und 5,60 ml Triallylmethylammoniumchlorid gegeben. Dazu wurde eine Lösung von 45 g Hypermer® 1083 in 378 g Edenor® MESU und 136,8 g Shellsol® D40 gemischt. Die Mischung wurde mit einem Krupp 3Mix-Mixer zu einer feinverteilten Emulsion homogenisiert und in einen 2Liter-Sulfierkolben mit KPG-Rührer gegeben und die Mischung auf 60°C erwärmt. Nach dem Entgasen durch Durchblasen von Stickstoff wurden 0,50 g Diethyl-2,2'-azobisisobutyrat zugegeben und auf 60°C erwärmt. Die Polymerisation startete und wurde durch Siedekühlung zwischen 60°C und 100°C gehalten. Anschließend wurde auf 40°C gekühlt. Dann wurde unter Rühren eine Lösung von 1,80 g Na₂SO₃ und 20,7 g Wasser zugegeben und 60 min bei 40°C gerührt. 282 g der Wasser-in-Öl-Polymerdispersion wurden entnommen und mit 18 g (6 Gew.%) eines Gemisches aus Glucopon® 225 DK und Marlipal® 013/30 im Gewichtsverhältnis 1:1 versehen. Die Anspringzeit und die unterschiedlichen Viskositäten des Produktes wurden bestimmt und sind in Tabelle 4 aufgeführt.

**Tabelle 4, Aktivierung mit 6 Gew.% eines Gemisches aus Glucopon® 225 DK/ Marlipal® 013/30 (1:1) und verändertem Öl/Wasser-Verhältnis in der Dispersion**

| Produktviskosität, | Anspringzeit | Lösungsviskosität 1,0 UpM | Lösungsviskosität 2,5 UpM | Lösungsviskosität 5,0 UpM |
|---|---|---|---|---|
| mPa*s | Sec. | mPa*s | mPa*s | mPa*s |
| 520 | 15 | 74400 | 37800 | 23000 |

### Vergleichsbeispiel 3:

Die Herstellung der Wasser-in-Öl-Polymerdispersion erfolgte wie im Vergleichsbeispiel 1. 286,8 g der Dispersion wurden entnommen und 13,2 g Imbentin® CMEA / 020 zugegeben. Dabei wurde die Dispersion fest.

### Beispiel 4:

Die Herstellung der Wasser-in-Öl-Polymerdispersion erfolgte wie im Vergleichsbeispiel 1.
286,8 g der Dispersion wurden entnommen und 13,2 g (4.4 Gew.-%) eines Gemisches aus Imbentin® CMEA/020 und Marlipal® 013/30 in den Gewichtsverhältnissen 2:1, 1:1, 1:2 zugegeben. Die Kenndaten des Produktes wurden bestimmt und sind in Tabelle 5 angegeben.

**Tabelle 5, Aktivierung mit 4,4 Gew.% eines Gemisches aus Imbentin® CMEA/020 / Marlipal® 013/30**

| Mischungsverhältnis Imbentin® / Marlipal | Produktviskosität, | Anspringzeit | Lösungsviskosität 1,0 UpM | Lösungsviskosität 2,5 UpM | Lösungsviskosität 5,0 UpM |
|---|---|---|---|---|---|
| | mPa*s | Sec. | mPa*s | mPa*s | mPa*s |
| 2:1 | 40000 | -¹⁾ | ¹⁾ | ¹⁾ | ¹⁾ |
| 1:1 | 20400 | 30 | 169000 | 86800 | 51000 |
| 1:2 | 180 | 120 | 66000 | 35200 | 21800 |

| | | | | | |
|---|---|---|---|---|---|
| -¹⁾ aufgrund hoher Produktvoskosität konnten die Produktkenndaten nicht bestimmt werden | | | | | |

### Beispiel 5:

Die Herstellung der Wasser-in-Öl-Polymerdispersion erfolgte wie im Vergleichsbeispiel 1. 286,8 g der Dispersion wurden entnommen und mit 13,2 g (4,4 Gew.%) eines Gemisches aus Imbentin® CMEA/130 und Maripol O 13/30 im Gewichtsverhältnis 10:1 versehen. Die Kenndaten des Produktes wurden bestimmt und sind in Tabelle 6 angegeben.

**Tabelle 6, Aktivierung mit 4,4 Gew.% eines Gemisches aus Imbentin® CMEA/130 / Marlipal® 013/30**

| Produktviskosität, | Anspringzeit | Lösungsviskosität 1,0 UpM | Lösungsviskosität 2,5 UpM | Lösungsviskosität 5,0 UpM |
|---|---|---|---|---|
| mPa*s | Sec. | mPa*s | mPa*s | mPa*s |
| 3200 | 20 | 98000 | 51200 | 32000 |

### Beispiel 6:

Die Herstellung der Wasser-in-Öl-Polymerdispersion erfolgte wie im Vergleichsbeispiel 1. 286,8 g der Dispersion wurden entnommen und 13,2 g (4,4 Gew.%) eines Gemisches aus Imbentin® CMEA/130 und Marlipal 013/30 in den Gewichtsverhältnissen 2:1, 1:1, 1:2 zugegeben. Die Kenndaten des Produktes wurden bestimmt und sind in Tabelle 7 angegeben.

**Tabelle 7, Aktivierung mit 4,4 % eines Gemisches aus Imbentin® CMEA/130 und Marlipal® 013/30**

| Mischungsverhältnis Imbentin® / Marlipal | Produktviskosität, | Anspringzeit | Lösungsviskosität 1,0 UpM | Lösungsviskosität 2,5 UpM | Lösungsviskosität 5,0 UpM |
|---|---|---|---|---|---|
| | mPa*s | Sec. | mPa*s | mPa*s | mPa*s |
| 2:1 | 1000 | 30 | 83000 | 44400 | 28000 |
| 1:1 | 420 | 40 | 114000 | 58400 | 36200 |
| 1:2 | 220 | 50 | 103000 | 54400 | 33600 |

### Beispiel 7:

Die Darstellung der Wasser-in-Öl-Polymerdispersion erfolgte wie im Vergleichsbeispiel 1. 286,8 g der Dispersion wurden entnommen und 13,2 g (4,4 Gew.%) eines Gemisches aus Imbentin® CMEA/130 und Marlipal® 013/80 in den Gewichtsverhältnissen 2:1, 1:1, 1:2 zugegeben. Die Kenndaten des Produktes wurden bestimmt und sind in Tabelle 8 angegeben.

**Tabelle 8, Aktivierung mit 4,4 % eines Gemisches aus Imbentin® CMEA/130 und Marlipal® 013/80**

| Mischungsverhältnis Imbentin® / Marlipal | Produktviskosität, | Anspringzeit | Lösungsviskosität 1,0 UpM | Lösungsviskosität 2,5 UpM | Lösungsviskosität 5,0 UpM |
|---|---|---|---|---|---|
| | mPa*s | Sec. | mPa*s | mPa*s | mPa*s |
| 2:1 | 2000 | 55 | 83000 | 44400 | 30000 |
| 1:1 | 1500 | 30 | 92000 | 48000 | 30000 |
| 1:2 | 1300 | 40 | 81000 | 43200 | 27000 |

### Beispiel 8:

Die Herstellung der Wasser-in-Öl-Polymerdispersion erfolgte wie im Beispiel 3. 285 g der Dispersion wurden entnommen und mit 15 g (5 Gew.%) eines Gemisches aus Imbentin® CMEA/020 und Marlipal® 013/80 im Gewichtsverhälmis 1:2 zugegeben. Die Kenndaten des Produktes wurden bestimmt und sind in Tabelle 9 angegeben.

**Tabelle 9, Aktivierung mit 5 Gew.% eines Gemisches aus Imbentin® CMEA/020 und Marlipal® 013/80 und verändertem Öl/Wasser-Verhältnis in der Emulsion**

| Produktviskosität, | Anspringzeit | Lösungsviskosität 1,0 UpM | Lösungsviskosität 2,5 UpM | Lösungsviskosität 5,0 UpM |
|---|---|---|---|---|
| mPa*s | Sec. | mPa*s | mPa*s | mPa*s |
| 164 | 10 | 105000 | 54400 | 32800 |

### Beispiel 9:

Die Herstellung der Wasser-in-Öl-Polymerdispersion erfolgte wie in Vergleichsbeispiel 1, wobei die Zusammensetzung der wäßrigen und der organischen Phase wie nachfolgend angegeben geändert wurde. Zu einer Lösung aus 114,0 g Acrylamid, 384,3 g Wasser und 341,4 g Acrylsäure[2-trimethylchloramino]ethylester wurden 0,70 g Pentanatriumdiethylentriaminpentaacetat, 0,17 g Ameisensäure und 0,10 g technische Salzsäure gegeben. Dazu wurde eine Lösung von 22,76 g Isohexadecan, 20,30 g Hypermer®2296 und 12,90 g Intrasol FA 1218/15 gemischt. Die Mischung wurde mit einem Krupp 3Mix-Mixer zu einer feinverteilten Emulsion homogenisiert und in einen 2Liter-Sulfierkolben mit KPG-Rührer gegeben. Als Katalysator wurden 0,092 g Azoisobuttersäuredinitril in 12,0 g Isohexadecan verwendet. Die Herstellung des Dispersionspolymerisates erfolgte ansonsten wie in Vergleichsbeispiel 1. 286.8 g der Dispersion wurden entnommen und 13,2 g (4,4 Gew.-%) Marlipal® O 13/50 zugegeben.
Die Kenndaten des Produktes wurden bestimmt und sind in Tabelle 10 angegeben.

**Tabelle 10, Aktivierung mit 4,4 Gew.% Marlipal® O 13/50**

| Produktviskosität, | Anspringzeit | Lösungsviskosität 1,0 UpM | Lösungsviskosität 2,5 UpM | Lösungsviskosität 5,0 UpM |
|---|---|---|---|---|
| mPa*s | Sec. | mPa*s | mPa*s | mPa*s |
| 3300 | 15-18 | 38400 | 18900 | 11200 |

### Vergleichsbeispiel 4:

Die Herstellung der Wasser-in-Öl-Polymerdispersion erfolgte wie im Beispiel 8. 286,8 g der Dispersion wurden entnommen und 13,2 g (4,4 Gew. %) Glucopon® 225 DK zugegeben.
Der Aktivator verklumpte dabei, so daß die Emulsion nicht homogenisiert werden konnte.

### Beispiel 10:

Die Herstellung der Wasser-in-ÖI-Polymerdispersion erfolgte wie im Beispiel 8. 286,8 g der Dispersion wurden entnommen und mit 13,2 g (4,4 Gew.%) eines Gemisches von Glucopon 225 DK und Marlipal® 013/30 im Gewichtsverhältnis 1:1 zugegeben. Die Kenndaten des Produktes wurden bestimmt und sind in Tabelle 11 angegeben.

**Tabelle 11, Aktivierung mit 4,4 Gew.% eines Gemisches aus Glucopon® 225 DK und Marlipal® 013/30**

| Produktviskosität, | Anspringzeit | Lösungsviskosität 1,0 UpM | Lösungsviskosität 2,5 UpM | Lösungsviskosität 5,0 UpM |
|---|---|---|---|---|
| mPa*s | Sec. | mPa*s | mPa*s | mPa*s |
| 8200 | 6 | 38400 | 19500 | 11800 |

### Vergleichsbeispiel 5:

Die Herstellung der Wasser-in-Öl-Polymerdispersion erfolgte wie im Beispiel 8. 286,8 g der Dispersion wurden entnommen und 13,2 g (4,4 Gew. %) Imbentin® CMEA/130 zugegeben. Die Kenndaten des Produktes wurden bestimmt und sind in Tabelle 12 angegeben. Aufgrund starker Klumpenbildung konnten nur die Produktviskosität und die Anspringzeit bestimmt werden.

**Tabelle 12, Aktivierung mit 4,4 Gew.% Imbentin® CMEA/130**

| Produktviskosität, | Anspringzeit | Lösungsviskosität 1,0 UpM | Lösungsviskosität 2,5 UpM | Lösungsviskosität 5,0 UpM |
|---|---|---|---|---|
| mPa*s | Sec. | mPa*s | mPa*s | mPa*s |
| 16500 | 120 | -² | -² | -² |

| | | | | |
|---|---|---|---|---|
| ²⁾ aufgrund von Klumpenbildung konnten nicht alle Kenndaten bestimmt werden | | | | |

### Beispiel 11:

Die Herstellung der Wasser-in-Öl-Polymerdispersion erfolgte wie im Beispiel 8. 286,8 g der Dispersion wurden entnommen und 13,2 g (4,4 Gew.%) eines Gemisches aus Imbentin® CMEA/130 und Marlipal O13/30 im Verhältnis 1:1 zugegeben. DieKennaaferloes PtodÜktes wurden bestimmt und sind in Tabelle 13 angegeben.

**Tabelle 13, Aktivierung mit 4,4 Gew. % eines Gemisches aus Imbentin® CMEA/130 / Marlipal® 013/30 (1:1)**

| Produktviskosität, | Anspringzeit | Lösungsviskosität 1,0 UpM | Lösungsviskosität 2,5 UpM | Lösungsviskosität 5,0 UpM |
|---|---|---|---|---|
| mPa*s | Sec. | mPa*s | mPa*s | mPa*s |
| 1800 | 20-22 | 36000 | 18600 | 10900 |

## Patentansprüche

1. Invertormischung, **dadurch gekennzeichnet, daß** sie mindestens einen oxethylierten Fettalkohol und mindestens ein oxethyliertes Fettsäuremono- und/oder dialkanolamid oder mindestens einen oxethylierten Fettalkohol und mindestens ein Alkylpolyglykosid enthält.

2. Invertormischung gemäß Anspruch 1, **dadurch gekennzeichnet, daß** der oxethylierte Fettalkohol im Verhältnis 1:10 bis 10:1, vorzugsweise im Verhältnis 1:3 bis 3:1, zu dem oxethylierten Fettsäuremono- und/oder dialkanolamid oder dem Alkylpolyglykosid vorliegt.

3. Verwendung einer Invertormischung gemäß einem der Ansprüche 1 oder 2 als Zusatz zu Wasser-in-Öl-Polymerdispersionen.

4. Verwendung gemäß Anspruch 3, **dadurch gekennzeichnet, daß** die Invertormischung der Wasser in Öl-Polymerdispersion in einer Menge von 0,5 bis 10 Gew.-%, vorzugsweise 2 bis 8 Gew.-%, besonders bevorzugt 3-6 Gew.-% bezogen auf die Gesamtmenge der Wasser-in-Öl-Polymerdispersion zugesetzt wird.

5. Verwendung gemäß Anspruch 3 oder 4, **dadurch gekennzeichnet, daß** eine Wasser-in-Öl-Polymerdispersion durch den Zusatz großer Mengen Wasser in eine Öl-in-Wasser-Polymerdispersion überführt wird.

6. Wasser-in-Öl-Polymerdispersion bestehend aus einer kontinuierlichen, mit Wasser praktisch nicht mischbaren organischen Phase und darin fein verteilten, wasserlöslichen und/öder wässerqueHbarenPötymerisaten und gegebenenfalls Hilfsstoffen, **dadurch gekennzeichnet, daß** sie eine Invertormischung gemäß einem der Ansprüche 1 oder 2 enthält.

7. Wasser-in-Öl-Polymerdispersion gemäß Anspruch 6, **dadurch gekennzeichnet, daß** sie aus:
A) 10 bis 70 Gew.%, bevorzugt 20 bis 50 Gew.%, besonders bevorzugt 25 bis 35 Gew.%, eines wasserlöslichen und/oder wasserquellbaren Polymerisates,
B) 20 bis 80 Gew.% einer organischer Phase,
C) 0,5 bis 10 Gew.% eines Wasser-in-Öl-Emulgators,
D) gegebenenfalls 0,01-2 Gew.-% eines Restmonomerenvernichters,
E) 0,5 bis 10 Gew.% der Invertormischung und einem
F) Rest auf 100 Gew.% Wasser
besteht.

8. Wasser-in-Öl-Polymerdispersion nach einem der Ansprüche 6 oder 7, **dadurch gekennzeichnet, daß** das Polymerisat auf Acrylsäure und/oder mindestens einem Acrylsäurederivat, vorzugsweise einem Salz der Acrylsäure, einem Salz der 2-Acrylamido-2-methylpropansulfonsäure, Acrylsäureamid, (Meth)Acrylsäure-2-(trimethylammonio)ethylester-chlorid und/oder (Meth)Acrylsäure-3-(trimethylammonio)propyl-amidchlorid basiert.

9. Verfahren zur Herstellung einer Wasser-in-Öl-Polymerdispersion gemäß einem der Ansprüche 6 bis 8, vorzugsweise durch Umkehrphasen-Emulsionspolymerisation, **dadurch gekennzeichnet, daß** dem Polymerisat nach der Polymerisation eine Invertormischung zugesetzt wird.

10. Verwendung der Wasser-in-Öl-Polymerdispersionen gemäß einem der Ansprüche 6 bis 8 als Flockungsmittel bei der Sedimentation von Feststoffen, insbesondere bei der Wasser- und Prozeßwasseraufbereitung bzw. Abwasserreinigung, bei der Rohstoffgewinnung, vorzugsweise von Kohle, Aluminium und Erdöl oder als Hilfsmittel bei der Papierherstellung und in der Zuckerindustrie.

11. Verwendung der Wasser-in-Öl-Polymerdispersionen gemäß einem der Ansprüche 6 bis 8 als Verdickungsmittel, vorzugsweise als Verdickungsmittel für Feuerlöschwasser.

12. Verwendung der Wasser-in-Öl-Polymerdispersionen nach einem der Ansprüche 6 bis 8 als Träger für Agrarchemikalien, vorzugsweise als Träger von Pflanzenschutzmitteln oder anderen biologisch wirksamen Stoffen.

13. Verwendung der Wasser-in-Öl-Polymerdispersionen nach einem der Ansprüche 6 bis 8 als Erosionsschutzmittel.

## Claims

1. An inverter mixture **characterised in that** it contains at least one ethoxylated fatty alcohol and at least one ethoxylated fatty acid mono- and/or dialkanolamide or at least one ethoxylated fatty alcohol and at least one alkylpolyglycoside.

2. An inverter mixture according to claim 1, **characterised in that** the ethoxylated fatty alcohol is present in the ratio 1:10 to 10:1, preferably in the ratio 1:3 to 3:1, to the ethoxylated fatty acid mono- and/or dialkanolamide or the alkylpolyglycoside.

3. Use of an inverter mixture according to one of claims 1 or 2 as an addition to water-in-oil polymer dispersions.

4. Use according to claim 3, **characterised in that** the inverter mixture is added to the water-in-oil polymer dispersion in a quantity of 0.5 to 10 wt.%, preferably 2 to 8 wt.%, particularly preferably 3-6 wt.%, relative to the total quantity of water-in-oil polymer dispersion.

5. Use according to claim 3 or 4, **characterised in that** a water-in-oil polymer dispersion is converted into an oil-in-water polymer dispersion by the addition of large quantities of water.

6. A water-in-oil polymer dispersion consisting of a continuous, virtually water-immiscible organic phase and, finely dispersed therein, water-soluble and/or water-swellable polymers and optionally auxiliary substances, **characterised in that** said dispersion contains an inverter mixture according to one of claims 1 or 2.

7. A water-in-oil polymer dispersion according to claim 6, **characterised in that** it consists of:
A) 10 to 70 wt.%, preferably 20 to 50 wt.%, particularly preferably 25 to 35 wt.%, of a water-soluble and/or water-swellable polymer,
B) 20 to 80 wt.% of an organic phase,
C) 0.5 to 10 wt.% of a water-in-oil emulsifier,
D) optionally 0.01-2 wt.% of a residual monomer scavenger,
E) 0.5 to 10 wt.% of the inverter mixture, and
F) water to make up to 100 wt.%.

8. A water-in-oil polymer dispersion according to one of claims 6 or 7, **characterised in that** the polymer is based on acrylic acid and/or at least one acrylic acid derivative, preferably a salt of acrylic acid, a salt of 2-acrylamidd-2-methylpropanesulfonic acid, acrylamide, (meth)acrylic acid 2-(trimethylammonio)ethyl ester chloride and/or (meth)acrylic acid 3-(trimethylammonio)propylamide chloride.

9. A process for the production of a water-in-oil polymer dispersion according, to one of claims 6 to 8, preferably by reversed-phase emulsion polymerisation, **characterised in that**, after the polymerisation, an inverter mixture is added to the polymer.

10. Use of the water-in-oil polymer dispersions according to one of claims 6 to 8 as flocculants for settling solids, in particular in water and process water treatment or waste water treatment, in the extraction of raw materials, preferably of coal, aluminium and petroleum or as auxiliaries in papermaking and in the sugar industry.

11. Use of the water-in-oil polymer dispersions according to one of claims 6 to 8 as thickeners, preferably as thickeners for fire extinguishing water.

12. Use of the water-in-oil polymer dispersions according to one of claims 6 to 8 as supports for agrochemicals, preferably as supports for phytosanitary agents or other biologically active substances.

13. Use of the water-in-oil polymer dispersions according to one of claims 6 to 8 as antierosion agents.

## Revendications

1. Mélange d'agents d'inversion, **caractérisé en ce qu'**il contient au moins un alcool gras oxéthylé et au moins un monoalcanolamide et/ou un dialcanolamide d'acide gras oxéthylé ou au moins un alcool gras oxéthylé et au moins un alkylpolyglycosïde.

2. Mélange d'agents d'inversion selon la revendication 1, **caractérisé en ce que** l'alcool gras oxéthylé se trouve dans un rapport 1:10 à 10:1, de préférence dans un rapport 1:3 à 3:1, au monoalcanolamide et/ou au dialcanolamide d'acide gras oxéthylé ou à l'alkylpolyglycoside.

3. Utilisation d'un mélange d'agents d'inversion selon l'une quelconque des revendications 1 ou 2 comme additif dans des dispersions eau-dans-huile de polymères.

4. Utilisation selon la revendication 3, **caractérisée en ce que** le mélange d'agents d'inversion est ajouté à la dispersion eau-dans-huile de polymères en une quantité de 0,5 à 10% en poids, de préférence de 2 à 8% en poids, de manière particulièrement préférée de 3 à 6% en poids par rapport à la quantité totale de la dispersion eau-dans-huile de polymères.

5. Utilisation selon la revendication 3 ou 4, **caractérisée en ce qu'**une dispersion eau-dans-huile de polymères est transformée en une dispersion huile-dans-eau de polymères par l'addition de quantités importantes d'eau.

6. Dispersion eau-dans-huile de polymères constituée par une phase organique continue, quasiment non miscible à l'eau et des polymères qui y sont finement divisés, solubles dans l'eau et/ou gonflables dans l'eau et le cas échéant des adjuvants, **caractérisée en ce qu'**elle contient un mélange d'agents d'inversion selon l'une quelconque des revendications 1 ou 2.

7. Dispersion eau-dans-huile de polymères selon la revendication 6, **caractérisée en ce qu'**elle est constituée par:
A) 10 à 70% en poids, de préférence 20 à 50% en poids, de manière particulièrement préférée 25 à 35% en poids, d'un polymère soluble dans l'eau et/ou gonflable dans l'eau,
B) 20 à 80% en poids d'une phase organique,
C) 0,5 à 10% en poids d'un émulsifiant eau-dans-huile,
D) le cas échéant 0,01 à 2% en poids d'un agent de décomposition des monomères résiduels,
E) 0,5 à 10% en poids du mélange d'agents d'inversion et
F) pour le reste, jusqu'à 100% en poids d'eàu.

8. Dispersion eau-dans-huile de polymères selon l'une quelconque des revendications 6 ou 7, **caractérisée en ce que** le polymère est à base d'acide acrylique et/ou d'au moins un dérivé d'acide acrylique, de préférence d'un sel de l'acide acrylique, d'un sel de l'acide 2-acrylamido-2-méthylpropanesulfonique, d'amide de l'acide acrylique, d'un chlorure d'ester 2-(triméthylammonio)éthylique de l'acide (méth)acrylique et/ou d'un chlorure de 3-(triméthylammonio)propylamide de l'acide (méth)acrylique.

9. Procédé pour la préparation d'une dispersion eau-dans-huile de polymères selon l'une quelconque des revendications 6 à 8, de préférence par polymérisation dans une émulsion par inversion de phases, **caractérisé en ce que** le polymère est additionné après la polymérisation d'un mélange d'agents d'inversion.

10. Utilisation des dispersions eau-dans-huile de polymères selon l'une quelconque des revendications 6 à 8 comme floculant lors de la sédimentation de solides, en particulier lors du traitement des eaux et des eaux industrielles resp. lors de l'épuration des eaux usées, lors de la production de matières premières, de préférence de charbon, d'aluminium et de pétrole ou comme adjuvant lors de la fabrication du papier et dans l'industrie du sucre.

11. Utilisation des dispersions eau-dans-huile de polymères selon l'une quelconque des revendications 6 à 8 comme épaississant, de préférence comme épaississant pour l'eau utilisée pour éteindre les incendies.

12. Utilisation des dispersions eau-dans-huile de polymères selon l'une quelconque des revendications 6 à 8 comme support pour les produits chimiques agricoles, de préférence comme supports d'agents phytosanitaires ou d'autres substances biologiquement actives.

13. Utilisation des dispersions eau-dans-huile de polymères selon l'une quelconque des revendications 6 à 8 comme agent de protection contre l'érosion.
